# EUROPEAN PATENT SPECIFICATION

(11) **EP 3 869 835 B1**
(45) Date of publication and mention of the grant of the patent: **25.06.2025**
(21) Application number: 20843847.3
(22) Date of filing: 02.07.2020
(51) Int. Cl.: H04L 67/00, H04L 41/0897, H04L 41/147, H04L 67/12, H04W 4/50, H04W 4/02, H04W 64/00

(54) **EDGE COMPUTING-BASED APPLICATION RELOCATION METHOD AND DEVICE**
VERFAHREN UND VORRICHTUNG FÜR STANDORTWECHSEL AUF DER BASIS VON EDGE-COMPUTING
PROCÉDÉ ET DISPOSITIF DE RELOCALISATION D'APPLICATION BASÉE SUR L'INFORMATIQUE EN PÉRIPHÉRIE

(30) Priority: 25.07.2019 CN 201910674978
(43) Date of publication of application: 25.08.2021
(73) Proprietor: ZTE Corporation, Shenzhen, Guangdong 518057 (CN)
(72) Inventor: HUANG, Meiqing, Shenzhen, Guangdong 518057 (CN)
(74) Representative: Swindell & Pearson Limited
(86) International application number: PCT/CN2020/099981
(87) International publication number: WO 2021/012926

(56) References cited:
- WO-A1-2019/011408
- WO-A1-2019/011408
- WO-A1-2019/147970
- CN-A- 108 616 816
- CN-A- 110 049 050
- ETSI: "Mobile Edge Computing (MEC); End to End Mobility Aspects", 23 June 2017 (2017-06-23), 650 Route des Lucioles, F-06921, Sophia Antipolis Cedex, France, pages 1 - 53, XP055430420, Retrieved from the Internet <URL:https://docbox.etsi.org/ISG/MEC/70-Draft/0018E2EMobility/MEC-0018E2EMobilityv034.docx> [retrieved on 20171130]
- ANONYMOUS: "Mobile Edge Computing (MEC); End to End Mobility Aspects", ETSI GROUP REPORT, vol. MEC, no. V1.1.1, 18 October 2017 (2017-10-18), pages 1 - 52, XP014301471

## Description

### TECHNICAL FIELD

The present invention relates to the field of communication technology, and in particular, to a method, a device, an edge computing system and a computer-readable storage medium for edge computing-based application relocation.

### BACKGROUND

In related technical schemes, the application relocation process of multi-access edge computing (MEC) is based on the trigger of UE user plane bearer change. Considering the delay of detecting an UE bearer change, the delay of creating a new application instance on a new MEC platform, and the delay of transferring application context from an old MEC platform to a new MEC platform, these delays may lead to packet loss in the application layer and even service interruption, thus affecting the quality of service (QoS).

WO 2019011408A1 discloses a method, comprising: inquiring, from a source mobile edge computing platform, a usage information for a terminal indicating a mobile edge computing application of the source mobile edge computing platform used by the terminal; requesting, from a target base station, a support information indicating if the mobile edge computing application is supported at the target base station; deciding on a handover of the terminal to the target base station based on the usage information and the support information.

"Mobile Edge Computing (MEC); End to End Mobility Aspects", 23 June 2017, Route des Lucioles, F-06921, Sophia Antipolis Cedex, discloses methods for relocation from source ME host to a target ME host. Specifically, in this document, stateless application instance relocation and stateful application instance relocation are provided.

### SUMMARY

The features of the method, the device, the edge computing system and the computer-readable storage medium for edge computing-based application relocation according to embodiments of the present disclosure are set out in the appended set of claims.

### BRIEF DESCRIPTION OF DRAWINGS

FIG. 1 is a flowchart of a method for edge computing-based application relocation according to an embodiment of the present invention;
FIG. 2 is a flowchart of a method for predicting a target edge computer for application relocation according to an embodiment of the present invention;
FIG. 3 is a partial flowchart of a method for edge computing-based application relocation according to an embodiment of the present invention;
FIG. 4 is a composition diagram of a device for edge computing-based application relocation according to an embodiment of the present invention;
FIG. 5 is a schematic structural diagram of an edge computing system according to an embodiment of the present invention;
FIG. 6 is a schematic diagram of a vehicle operation scene according to an embodiment of the present invention;
FIG. 7 is a schematic diagram of a method for edge computing-based application relocation according to an embodiment of the present invention; and

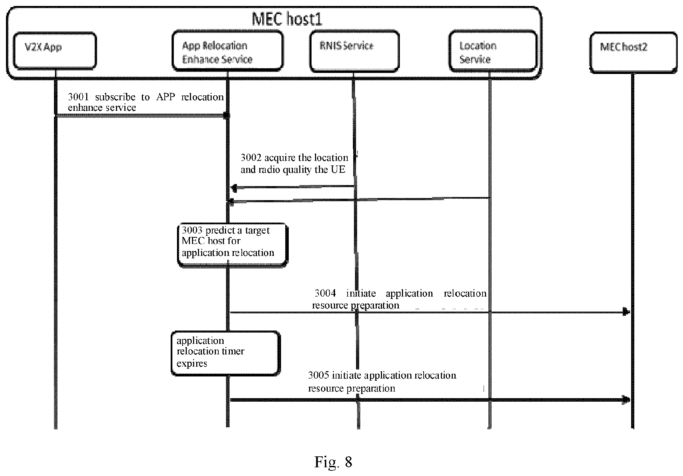

FIG. 8 is a schematic diagram of a method for edge computing-based application relocation according to an embodiment of the present invention.

### DETAILED DESCRIPTION

In order to explain the technical schemes and effects adopted by the present invention to achieve the intended purpose, the present invention will be described in detail below with reference to the drawings and advantageous embodiments.

Vehicle-to-everything (V2X) refers to a comprehensive service that realizes the connection between vehicles, vehicles and roads, vehicles and persons by the Cellular V2X (C-V2X) communication technology, and improves the intelligent level and automatic driving ability of vehicles, thereby improving traffic efficiency and driving safety.

ETSI MEC (Multi-access Edge Computing) is an authoritative edge computing research organization in the industry, which enables operators or third-party services to be deployed close to users, so as to realize the service environment of local traffic offloading and service localization.

It is the focus of research on V2X to provide communication services with low delay and high reliability for V2X services based on edge computing. Due to the high-speed movement of vehicles and the security of vehicle operation involved in V2X services, MEC are required to provide communication services with high reliability and low delay. The movement of vehicles will cause V2X applications to move from one edge computing host service range to another. Due to the high-speed and large-scale movement of vehicles, the V2X applications are distributed on different MEC platforms. MEC system provides business continuity of V2X applications in the movement of vehicles by relocating the V2X application among MEC platforms.

In the existing technologies, the process of application relocation is as follows.
1. Detection of UE bearer change. In a situation, the UE moves in an underlying network, and a bearer path change is triggered. The bearer path change may include: UE is still in a service ME host coverage or the UE has moved out from the service ME host coverage to another ME host coverage. The detection of UE bearer change may include: UE IP address change or detection of ME host change of signaling connection of underlying network by RNIS; or a detection of data plane change.
2. Management of service relocation. MEO or MEP is informed of the bearer path change. The management of service relocation determines which kind of service relocation is to be conducted and how to perform a relocation sub-process.
3. Relocation of APP (may be referred to as application or mobile application) instance. The APP instance serving UE is relocated from S-MEH to T-MEH if necessary.
4. Updating of service routing. The routing rule of UE is updated and a new service of target ME host is activated.
5. Termination of service of S-MEH.

This problem is particularly serious in the application scenario of V2X based on edge computing, because a large number of MEC platforms are deployed along the road during the high-speed and large-scale movement of vehicles, which requires V2X applications to perform frequent relocation actions. If MEC cannot provide service continuity with high-reliability and low-delay for the V2X services during the high-speed movement of vehicles, the security of the V2X applications cannot be guaranteed.

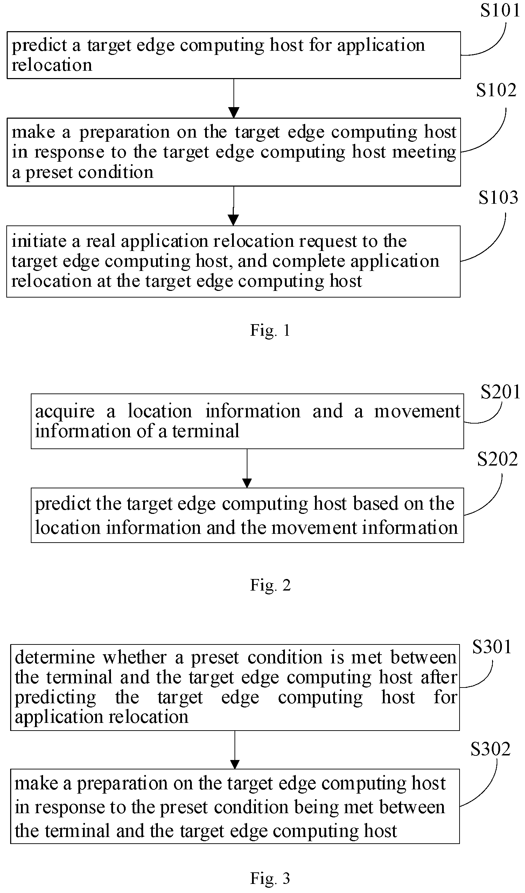

As shown in FIG. 1, according to some embodiments of the present invention, a method for edge computing-based application relocation is provided, including the following steps S101 to S103.

At step S101, a target edge computing host for application relocation is predicted.

It should be noted that the target edge computing host (MEC host), in some embodiments, be predicted for application relocation of a user equipment (UE).

At step S102, a preparation on the target edge computing host is made when the target edge computing host meets a preset condition.

Therefore, a preparation for application relocation can be made on the target MEC host in advance in response to the MEC host meeting a preset condition, so as to shorten the delay of application relocation.

At step S103, a real application relocation request is initiated to the target edge computing host, and application relocation is completed at the target edge computing host.

It should be noted that the "real application relocation request" described here refers to the real application relocation operation on the target edge computing host. The operational process of application relocation is conventional in the art, and will not be described here. At this time, due to the preparation on the target MEC host in advance, the delay of this process can be greatly shortened.

According to the method for edge computing-based application relocation of an embodiment of the present invention, a target edge computing host for application relocation is predicted in advance, and then a preparation can be made on the target edge computing host in advance. Therefore, during initiating a real application relocation request to the target edge computing host, the delay caused by the preparation of the host for application relocation can be shortened, thus effectively solving the problem of application relocation delay caused by detection of bearer change in existing technologies, and improving the application switching.

According to some embodiments of the present invention, as shown in FIG. 2, predicting the target edge computing host for application relocation includes the following steps.

At step S201, current location information and movement information of a terminal are acquired.

It should be noted that the terminal may change the location at any time. By acquiring the location information and the movement information of the terminal, a movement path and a location change trend of the terminal can be obtained.

At step S202, a target edge computing host is predicted based on the current location information and the movement information.

That is to say, a target edge computing host can be predicted according to the movement path and the location change trend of the terminal.

In some embodiments of the present invention, the movement information of the terminal includes at least one of historical location information, movement direction, movement speed and navigation information of the terminal. That is to say, the movement information of the terminal, in some embodiments, includes one of the historical location information, the movement direction, the movement speed and the navigation information of the terminal; or, the movement information of the terminal, in some embodiments, includes two of the historical location information, the movement direction, the movement speed and the navigation information of the terminal; or, the movement information of the terminal, in some embodiments, includes three of the historical location information, the movement direction, the movement speed and the navigation information of the terminal; or, the movement information of the terminal, in some embodiments, includes all of the historical location information, the movement direction, the movement speed and the navigation information of the terminal.

The location information of the terminal, in some embodiments, includes historical location information and current location information of the terminal.

It can be understood that by acquiring the current location information and historical location information, the movement direction, the movement speed and the navigation information of the terminal, a route to be travelled by the terminal can be determined, so that the target edge computing host can be predicted according to the route of the terminal. Therefore, the accuracy and reliability of the prediction of the target edge computing host can be improved.

In some embodiments, if the terminal is a vehicle, the movement information of the terminal includes, but not limited to, historical location information of UE, movement direction of UE, movement speed of UE, and navigation information of the vehicle. The navigation information of the vehicle is a series of location information that the vehicle plans to pass through, which is input by the V2X application to the MEC application relocation enhance service.

According to some embodiments of the present invention, the method also includes: selecting an optimal edge computing host as the target edge computing host when there is a plurality of edge computing hosts at a same location. It should be noted that the "optimal edge computing host" described here can be understood as the edge computing host with the optimal processing performance at present, which is determined according to a comprehensive consideration of various decisions. In some embodiments, the optimal edge computing host is selected by the comprehensive consideration of factors such as cell load, radio signal and MEC host load. It can be understood that by selecting the optimal edge computing host as the target edge computing host, the QoS of the edge computing host can be improved.

In some embodiments of the present invention, determining whether a preset condition is met between the terminal and the target edge computing host after predicting the target edge computing host for application relocation includes: making a preparation on the target edge computing host in response to the preset condition being met between the terminal and the target edge computing host.

It should be noted that the "preset condition" described here, in some embodiments, is determined by considering both the distance and the time to reach the target edge computing host. The preset condition, in embodiments, includes: a distance threshold between the terminal and the target edge computing host; and/or a time threshold for the terminal to reach the target edge computing host. That is to say, the preset condition, in some embodiments, is the distance threshold between the terminal and the target edge computing host; the preset condition, in some embodiments, also is the time threshold for the terminal to reach the target edge computing host; and the preset condition, in some embodiments, also is the distance threshold between the terminal and the target edge computing host and the time threshold for the terminal to reach the target edge computing host.

In some embodiments, a distance threshold for the target edge computing host to prepare for application relocation is set. A preparation for relocation is initiated, if a distance between the current location of the UE and a point in the navigation location list nearest to a cell connected to the application relocation target edge computing host for application relocation, reaches the distance threshold.

According to embodiments of the present invention, the method further includes: releasing the preparation of the target edge computing host if the distance between the terminal and the target edge computing host is not reduced to be below the distance threshold within a preset period of time, and re-predicting a target edge computing host.

In some embodiments, a relocation resource release timer is set. If there is no occurrence of real application relocation before a timer timeout, the preparation resource for application relocation is released, including deleting the application instance and application context data that has been transmitted to the target edge computing host.

In embodiments of the present invention, a preparation includes: creating an application instance on the target edge computing host, or transmitting the application context information to the target edge computing host.

It should be noted that, if no application instance was created on the target MEC host, a new application instance is created, and the UE information and application context are transmitted to the application instance of the target MEC host. If there is a corresponding application instance on the target MEC host, the application context information is transmitted to the target edge computing host. Therefore, since the application instance has been created in advance on the target MEC host and the context information has been prepared in advance, the delay of the process of application relocation can be greatly shortened.

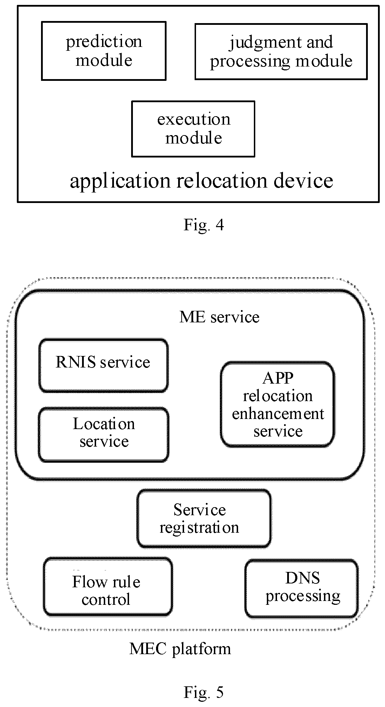

As shown in FIG. 4, according to some embodiments of the present invention, a device for edge computing-based application relocation is provided, including a prediction module, a judgment and processing module and an execution module.

The prediction module is configured to predict a target edge computing host for application relocation. It should be noted that the target edge computing host (MEC host), in some embodiments, is predicted for application relocation of a user equipment (UE).

The judgment and processing module is configured to make a preparation on the target edge computing host when the target edge computing host meets a preset condition. Therefore, a preparation for application relocation can be made on the target MEC host in advance in response to the MEC host meeting a preset condition, so as to shorten the delay of application relocation.

The execution module is configured to initiate a real application relocation request to the target edge computing host, and application relocation is completed at the target edge computing host. It should be noted that the "real application relocation request" described here refers to the real application relocation operation on the target edge computing host. The operational process of application relocation is conventional in the art, and will not be described here. At this time, due to the preparation on the target MEC host in advance, the delay of this process can be greatly shortened.

According to the device for edge computing-based application relocation of an embodiment of the present invention, a target edge computing host for application relocation is predicted in advance, and then a preparation can be made on the target edge computing host in advance. Therefore, during initiating a real application relocation request to the target edge computing host, the delay caused by the preparation of the host for application relocation can be shortened, thus effectively solving the problem of application relocation delay caused by detection of bearer change in existing technologies, and improving the application switching.

According to some embodiments of the present invention, the prediction module is configured to acquire current location information and movement information of a terminal. It should be noted that the terminal may change the location at any time. By acquiring the current location information and the movement information of the terminal, a movement path and a location change trend of the terminal can be obtained.

A target edge computing host is predicted based on the current location information and the movement information. That is to say, a target edge computing host can be predicted according to the movement path and the location change trend of the terminal.

In some embodiments of the present invention, the movement information of the terminal includes at least one of historical location information, movement direction, movement speed and navigation information of the terminal. That is to say, the movement information of the terminal, in some embodiments, includes one of the historical location information, the movement direction, the movement speed and the navigation information of the terminal; or, the movement information of the terminal, in some embodiments, includes two of the historical location information, the movement direction, the movement speed and the navigation information of the terminal; or, the movement information of the terminal, in some embodiments, includes three of the historical location information, the movement direction, the movement speed and the navigation information of the terminal; or, the movement information of the terminal, in some embodiments, includes all of the historical location information, the movement direction, the movement speed and the navigation information of the terminal.

The location information of the terminal, in some embodiments, includes historical location information and current location information of the terminal.

It can be understood that by acquiring the current location information and historical location information, the movement direction, the movement speed and the navigation information of the terminal, a route to be travelled by the terminal can be determined, so that the target edge computing host can be predicted according to the route of the terminal. Therefore, the accuracy and reliability of the prediction of the target edge computing host can be improved.

In some embodiments, if the terminal is a vehicle, the movement information of the terminal includes, but not limited to, historical location information of UE, movement direction of UE, movement speed of UE, and navigation information of the vehicle. The navigation information of the vehicle is a series of location information that the vehicle plans to pass through, which is input by the V2X application to the MEC application relocation enhance service.

According to some embodiments of the present invention, the prediction module is also configured to select an optimal edge computing host as the target edge computing host when there is a plurality of edge computing hosts at a same location. It should be noted that the "optimal edge computing host" described here can be understood as the edge computing host with the optimal processing performance at present, which is determined according to a comprehensive consideration of various decisions. In some embodiments, the optimal edge computing host is selected by the comprehensive consideration of factors such as cell load, radio signal and MEC host load. It can be understood that by selecting the optimal edge computing host as the target edge computing host, the QoS of the edge computing host can be improved.

In some embodiments of the present invention, a preparation is made on the target edge computing host in response to the preset condition being met between the terminal and the target edge computing host.

It should be noted that the "preset condition" described here, in some embodiments, is determined by considering both the distance and the time to reach the target edge computing host. The preset condition, in embodiments, includes: a distance threshold between the terminal and the target edge computing host; and/or a time threshold for the terminal to reach the target edge computing host. That is to say, the preset condition, in some embodiments, is the distance threshold between the terminal and the target edge computing host; the preset condition may also be the time threshold for the terminal to reach the target edge computing host; and the preset condition may also be the distance threshold between the terminal and the target edge computing host and the time threshold for the terminal to reach the target edge computing host.

In some embodiments, a distance threshold for the target edge computing host to prepare for application relocation is set. A preparation for relocation is initiated, if a distance between the current location of the UE and a point in the navigation location list nearest to a cell connected to the application relocation target edge computing host for application relocation, reaches the distance threshold.

According to embodiments of the present invention, the execution module is also configured to release the preparation of the target edge computing host if the distance between the terminal and the target edge computing host is not reduced to be below the distance threshold within a preset period of time, and re-predicting a target edge computing host.

In some embodiments, a relocation resource release timer is set. If there is no occurrence of real application relocation before a timer timeout, the preparation resource for application relocation is released, including deleting the application instance and application context data that has been transmitted to the target edge computing host.

In embodiments of the present invention, a preparation includes: creating an application instance on the target edge computing host, or transmitting the application context information to the target edge computing host.

It should be noted that, if no application instance was created on the target MEC host, a new application instance is created, and the UE information and application context are transmitted to the application instance of the target MEC host. If there is a corresponding application instance on the target MEC host, the application context information is transmitted to the target edge computing host. Therefore, since the application instance has been created in advance on the target MEC host and the context information has been prepared in advance, the delay of the process of application relocation can be greatly shortened.

A device for edge computing-based application relocation, according to an embodiment of the present invention, includes: a memory, a processor and a computer program stored in the memory and executable by the processor, where the computer program, when executed by the processor, causes the processor to perform the steps of the above method for edge computing-based application relocation.

According to the device for edge computing-based application relocation of an embodiment of the present invention, by running the method for edge computing-based application relocation, compared with existing technologies, the delay of application relocation on the edge computing host can be shortened, and the service continuity of an edge service, in particular a vehicle-to-everything (V2X) service during movement of vehicles, can be improved, thereby being possible to secure high reliability and low delay of a V2X application program during movement of vehicles, and improving the safety during vehicle operation.

As shown in FIG. 5, according to some embodiments of the present invention, an edge computing system is provided, including an application relocation device and function modules.

As shown in FIG. 5, the application relocation device (i.e., the APP relocation enhance service module shown in FIG. 5) is the above described application relocation device. The function modules (including the RNIS service module shown in FIG. 5) are configured to provide information for the application relocation device to make a preparation. It should be noted that information interaction, in some embodiments, is performed between the function modules and the application relocation module through an interactive interface. Therefore, the function modules can provide corresponding information for the application relocation module to make a preparation. In some embodiments, the function modules can provide the current location information and movement information of the terminal, network signal strength information, etc., to the application relocation module.

According to the edge computing system of an embodiment of the present invention, information interaction can be performed between the function modules and the application relocation module. Therefore, the function modules can provide corresponding information to the application relocation module, to allow the application relocation module to make a preparation in advance. Thus, the delay of application relocation is effectively reduced, and the QoS of the edge computing system is improved.

According to some embodiments of the present invention, as shown in FIG. 5, the function modules include a radio network information module (RNIS service module) and a location module.

The location module is configured to provide the location information of the terminal to the application relocation device. Therefore, according to the historical location and current location, the movement speed and direction, and the navigation information of the UE, the MEC host located in front of the UE in a moving direction and on the navigation route can be selected as the relocation target MEC host.

The RNIS service module is configured to provide radio network information of the edge computing host to the application relocation device. In some embodiments, the RNIS module provides the application relocation device with the strength of the radio network signal of the edge computing host. Therefore, a selection can be made according to the radio quality of the cell in front of UE in the movement direction, and the MEC host connected to the cell with the optimal radio quality is selected as the preferred host.

In addition, V2X APP is deployed on MEC platform and interacts with ME services through Mp1 interface. The application relocation device, in some embodiments, interact with V2X APP to obtain the navigation information of the UE.

It should be noted that the application relocation device, in some embodiments, predict the application target MEC host in front of the UE in the movement direction according to the current location of the UE, the movement direction of the UE, the speed and navigation information of the UE, and the radio quality of the UE, etc.

Application relocation is triggered for resource preparation if it is detected that a nearest distance between the current location of the UE and a series of locations of cells connected to application target MEC hosts is smaller than the threshold.

The application information, UE id and application context are sent to the application target MEC host, which stores the information and detects whether an application instance exists, and if not, creates a new application instance, and sends the UE id and application context to the instance.

A computer-readable storage medium, according to an embodiment of the present invention, storing a computer program which, when executed by a processor, causes the processor to perform the steps of the method for edge computing-based application relocation.

According to the computer-readable storage medium of an embodiment of the present invention, by running the method for edge computing-based application relocation, compared with existing technologies, the delay of application relocation on the edge computing host can be shortened, and the service continuity of an edge service, in particular a vehicle-to-everything (V2X) service during movement of vehicles, can be improved, thereby being possible to secure high reliability and low delay of a V2X application program during movement of vehicles, and improving the safety during vehicle operation.

The method for edge computing-based application relocation according to the present invention will be described below in detail by following two embodiments.

### Embodiment one

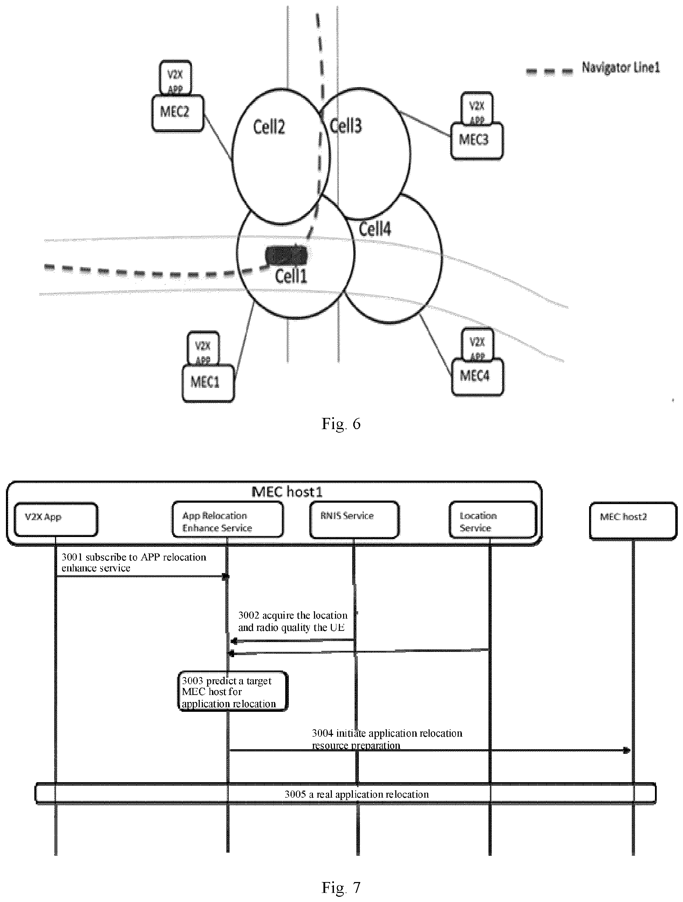

The moving route of the UE and MEC deployment is shown in FIG. 6. The UE is currently connected to Cell 1, which is connected to MEC host 1. The V2X APP instance is also deployed on MEC host 1. The navigation route of the UE is to move forward and left. A position to the right of an intersection on the road is covered by Cell 4, which is connected to MEC host 4. A position to the left of the intersection is covered by Cell 2 and Cell 3, which are connected to MEC host 2 and MEC host 3, respectively, and the quality of Cell 2 is better than the quality of Cell 3.

The ME services deployed on each MEC host platform include: RNSI service, location service and APP relocation enhance service. A service deployed on MEC platform is responsible for the application moving process of MEC platform. V2X APP is deployed on MEC platform and interacts with ME services through Mp1 interface.

In order to enhance the ability of application relocation, V2X APP subscribes to APP relocation enhance service.

V2X APP interacts with APP relocation enhance service through Mp 1 interface, and sends a subscription request, in which brought-in parameters include, but are not limited to, UE id, APP id and navigation information of UE. The navigation information consists of a series of directional locations and a plurality of cells respectively corresponding to each of the directional locations . It is not within the scope of the present invention that how to determine a cell to which a location of navigation information belongs, which can be obtained by using conventional radio network planning methods. In some embodiments, V2X APP acquires the radio network configuration information of the network, and maps the locations in the navigation route to the radio network one by one to acquire the cell information to which each location belongs.

The APP relocation enhance service acquires the location, movement information and radio quality of the movement route of the UE.

The APP relocation enhance service interacts with the location service to obtain a real-time location of the UE.

The real-time location of the UE is matched with the list of locations of the navigation route, to pick up a set of locations along the navigation route, from the current location of the UE to a location at a certain distance ahead in the movement direction, which are recorded as a set of locations to be travelled along the navigation route. This distance, in some embodiments, is fixed or configured by parameters.

The APP relocation navigation service interacts with RNIS service to obtain the radio quality of the cell to which each location in the set of locations ahead in the movement direction belongs.

Information of the application relocation target MEC host in front of UE in the movement direction is selected.

The APP relocation enhance service combines the location information of the UE, the navigation information of the UE, and the radio quality information of the navigation route to make a decision.

According to the navigation route, MEC host 4 connected to Cell 4 is excluded, because the path to be travelled is not covered by this cell.

According to the radio quality of the cell, the MEC host 2 connected to Cell 2 and the MEC host 3 connected to Cell 3 both locate along a route that contains the set of locations to be travelled, the MEC host 2 connected to Cell 2 with the optimal radio quality is selected as the application relocation target MEC host.

The application relocation resource preparation is initiated, and the APP relocation enhance service initiates an application pre-handover to the application relocation target MEC host.

This service sends an application pre-relocation request to MEC host 2. The brought-in information may include, but not limited to, UE id, V2X APP id, pre-relocation indication, and the context information of V2X APP id.

MEC host 2 creates a V2X APP instance and sends UE id and the context information of V2X APP id to the instance, and an indication of successful instance creation is returned to the APP relocation enhance service on MEC host 1.

A real application relocation is initiated. The operation steps of application relocation are conventional and will not be described in detailed here. According to the application relocation method in the present invention, since the APP instance has been created in advance and the context information of the application instance has been transmitted, the delay of application relocation can be greatly shortened.

### Embodiment two

The moving route of the UE and MEC deployment is shown in FIG. 6. The UE is currently connected to Cell 1, which is connected to MEC host 1. The V2X APP instance is also deployed on MEC host 1. The navigation route of the UE is to move forward and left. The right intersection is covered by Cell 4, which is connected to MEC host 4. The left intersection is covered by Cell 2 and Cell 3, which are connected to MEC host 2 and MEC host 3, respectively, and the quality of Cell 2 is better than the quality of Cell 3.

The ME services deployed on each MEC Host platform include: RNSI service, location service and APP relocation enhance service. A service deployed on MEC platform is responsible for the application moving process of MEC platform. V2X APP is deployed on MEC platform and interacts with ME services through Mp1 interface.

In this embodiment, it is assumed that the UE does not follow the navigation route to the left front, but temporarily travels to the right front fork in the road. The steps of application relocation are as follows.

In order to enhance the ability of application relocation, V2X APP subscribes to APP relocation enhance service.

V2X APP interacts with APP relocation enhance service through Mp 1 interface, and sends a subscription request, in which brought-in parameters include, but are not limited to, UE id, APP id and navigation information of UE. The navigation information consists of a series of directional location information and the cell to which each location information belongs. It is not within the scope of the present invention to query about the cell to which the location information of location navigation belongs, which can be obtained by using common radio network planning methods. In some embodiments, V2X APP acquires the radio network configuration information of the network, and maps the location information of the navigation route to the radio network one by one to acquire the cell information to which each location belongs.

The APP relocation enhance service acquires the location, movement information and radio quality of the travelling route of the UE.

The APP relocation enhance service interacts with the location service to obtain a real-time location of the UE.

The real-time location of the UE is matched with the list of locations of the navigation route to find out a list of locations of the UE along the navigation route from the current location to a location at a certain distance ahead in the movement direction, which is recorded as a set of locations moving to the front. This distance, in some embodiments, is fixed or configured by parameters.

The APP relocation navigation service interacts with RNIS service to obtain the radio quality of the cell to which each location in the set of locations ahead in the movement direction belongs.

Information of the application relocation target MEC host in front of UE in the movement direction is selected.

The APP relocation enhance service combines the location information of the UE, the navigation information of the UE, and the radio quality information of the navigation route to make decisions.

According to the navigation route, MEC host 4 connected to Cell 4 is excluded, because the route ahead is not covered by this cell.

According to the radio quality of the cell, MEC host 2 connected to Cell 2 and the MEC host 3 connected to Cell 3, which are located in the route ahead at the same time, are screened, and the MEC host 2 connected to Cell 2 with the optimal radio quality is selected as the application relocation target MEC host.

The application relocation resource preparation is initiated, and the APP relocation enhance service initiates an application pre-handover to the application relocation target MEC host.

This service sends an application pre-relocation request to MEC host2. The brought-in information may include, but not limited to, UE id, V2X APP id, pre-relocation indication, and the context information of V2X APP id.

MEC host2 creates a V2X APP instance and sends UE id and the context information of V2X APP id to the instance, and an indication of successful instance creation is returned to the APP relocation enhance service on MEC host1.

MEC host1 starts a timer to wait for a real application relocation to be initiated. The timer duration, in some embodiments, is fixed or parameter configured.

In this application, since the UE does not travel follow the navigation route, but temporarily travels to the right front. The APP relocation enhance service sends a resource release instruction to MEC host 2 after the relocation timer expires. After receiving the instruction, MEC host 2 releases the created V2X APP resources and context information. Therefore, the waste of application resources can be avoided when the vehicle does not follow the navigation route.

Several embodiments according to the present invention are described, the technical schemes and technical effects for implementing the present invention shall be understood. The embodiments above and accompanying drawings are for reference and description only and are not intended to limit the present invention.

## Claims

1. A method for edge computing-based application relocation, performed by a MEC host platform, comprising:
predicting a target edge computing host for application relocation (S101);
making a preparation on the target edge computing host in response to the target edge computing host meeting a preset condition (S102) comprising:
a distance threshold between a terminal and the target edge computing host, and/or
a time threshold for the terminal to reach the target edge computing host;
initiating a real application relocation request to the target edge computing host, and performing application relocation at the target edge computing host (S103); and
releasing the preparation of the target edge computing host in response to a distance between the terminal and the target edge computing host not being reduced below the distance threshold within a preset period of time, and re-predicting the target edge computing host;
wherein the preparation comprises:
creating an application instance on the target edge computing host, or transmitting an application context information to the target edge computing host.

2. The method for edge computing-based application relocation of claim 1, wherein predicting the target edge computing host for application relocation comprises:
acquiring current location information and movement information of a terminal (S201); and
predicting the target edge computing host based on the current location information and the movement information (S202).

3. The method for edge computing-based application relocation of claim 2, wherein the movement information of the terminal comprises at least one of location information, movement direction, movement speed and navigation information of the terminal.

4. The method for edge computing-based application relocation of claim 2, wherein the method further comprises:
selecting an edge computing host as the target edge computing host in response to an existence of a plurality of edge computing hosts at a same location.

5. A device for edge computing-based application relocation in a MEC host platform, comprising:
a prediction module, configured to predict a target edge computing for application relocation;
a judgment and processing module, configured to make preparation on the target edge computing host in response to a judgment that the target edge computing host meets a preset condition comprising:
a distance threshold between a terminal and the target edge computing host, and/or
a time threshold for the terminal to reach the target edge computing host; and
release the preparation of the target edge computing host in response to the distance between the terminal and the target edge computing host not being reduced below the distance threshold within a preset period of time, and re-predict the target edge computing host; and
an execution module, configured to initiate a real application relocation request to the target edge computing host and complete application relocation at the target edge computing host;
wherein the preparation comprises:
creating an application instance on the target edge computing host, or transmitting an application context information to the target edge computing host.

6. The device for edge computing-based application relocation of claim 5, wherein the prediction module is configured to:
acquire a current location information and a movement information of a terminal; and
predict the target edge computing host based on the current location information and the movement information.

7. The device for edge computing-based application relocation of claim 6, wherein the movement information of the terminal comprises at least one of location information, movement direction, movement speed and navigation information of the terminal.

8. The device for edge computing-based application relocation of claim 6, wherein the prediction module is further configured to:
select an edge computing host as the target edge computing host in response to an existence of a plurality of edge computing hosts at a same location.

9. An edge computing system, comprising:
the application relocation device of any one of claims 5 to 8; and
function modules, configured to provide information for the application relocation device to make preparation.

10. The edge computing system of claim 9, wherein the function modules comprise:
a location module, configured to provide location information of a terminal to the application relocation device; and
a radio network information module, configured to provide radio network information of the edge computing host to the application relocation device.

11. A computer-readable storage medium storing a computer program which, when executed by a processor, causes the processor to perform the steps of the method for edge computing-based application relocation of any one of claims 1 to 4.

## Patentansprüche

1. Verfahren zur Anwendungsverlagerung auf der Basis von Edge Computing, das durch eine MEC-Hostplattform durchgeführt wird, umfassend:
Vorhersagen eines Ziel-Edge-Computing-Hosts für eine Anwendungsverlagerung (S101);
Treffen einer Vorbereitung auf dem Ziel-Edge-Computing-Host als Reaktion darauf, dass der Ziel-Edge-Computing-Host eine voreingestellte Bedingung erfüllt (S102), die Folgendes umfasst:
einen Entfernungsschwellenwert zwischen einem Endgerät und dem Ziel-Edge-Computing-Host, und/oder
einen Zeitschwellenwert für das Endgerät, um den Ziel-Edge-Computing-Host zu erreichen;
Initiieren einer realen Anwendungsverlagerungsanforderung an den Ziel-Edge-Computing-Host und Durchführen einer Anwendungsverlagerung an dem Ziel-Edge-Computing-Host (S103); und
Freigeben der Vorbereitung des Ziel-Edge-Computing-Hosts als Reaktion darauf, dass eine Entfernung zwischen dem Endgerät und dem Ziel-Edge-Computing-Host nicht innerhalb eines voreingestellten Zeitraums unter den Entfernungsschwellenwert reduziert wird, und erneutes Vorhersagen des Ziel-Edge-Computing-Hosts;
wobei die Vorbereitung Folgendes umfasst:
Erzeugen einer Anwendungsinstanz auf dem Ziel-Edge-Computing-Host oder Übertragen einer Anwendungskontextinformation an den Ziel-Edge-Computing-Host.

2. Verfahren zur Anwendungsverlagerung auf der Basis von Edge Computing nach Anspruch 1, wobei das Vorhersagen des Ziel-Edge-Computing-Hosts für eine Anwendungsverlagerung Folgendes umfasst:
Erlangen aktueller Standortinformationen und Bewegungsinformationen eines Endgeräts (S201); und
Vorhersagen des Ziel-Edge-Computing-Hosts auf der Basis der aktuellen Standortinformationen und der Bewegungsinformationen (S202).

3. Verfahren zur Anwendungsverlagerung auf der Basis von Edge Computing nach Anspruch 2, wobei die Bewegungsinformationen des Endgeräts mindestens eines von Standortinformationen, Bewegungsrichtung, Bewegungsgeschwindigkeit und Navigationsinformationen des Endgeräts umfassen.

4. Verfahren zur Anwendungsverlagerung auf der Basis von Edge Computing nach Anspruch 2, wobei das Verfahren ferner Folgendes umfasst:
Auswählen eines Edge-Computing-Hosts als den Ziel-Edge-Computing-Host als Reaktion auf eine Existenz einer Vielzahl von Edge-Computing-Hosts an einem gleichen Standort.

5. Vorrichtung zur Anwendungsverlagerung auf der Basis von Edge Computing in einer MEC-Hostplattform, umfassend:
ein Vorhersagemodul, das dazu konfiguriert ist, ein Ziel-Edge-Computing für eine Anwendungsverlagerung vorherzusagen;
ein Beurteilungs- und Verarbeitungsmodul, das dazu konfiguriert ist, eine Vorbereitung zu treffen als Reaktion auf eine Beurteilung, dass der Ziel-Edge-Computing-Host eine voreingestellte Bedingung erfüllt, die Folgendes umfasst:
einen Entfernungsschwellenwert zwischen einem Endgerät und dem Ziel-Edge-Computing-Host, und/oder
einen Zeitschwellenwert für das Endgerät, um den Ziel-Edge-Computing-Host zu erreichen; und
Freigeben der Vorbereitung des Ziel-Edge-Computing-Hosts als Reaktion darauf, dass die Entfernung zwischen dem Endgerät und dem Ziel-Edge-Computing-Host nicht innerhalb eines voreingestellten Zeitraums unter den Entfernungsschwellenwert reduziert wird, und erneutes Vorhersagen des Ziel-Edge-Computing-Hosts; und
ein Ausführungsmodul, das zum Initiieren einer realen Anwendungsverlagerungsanforderung an den Ziel-Edge-Computing-Host und Vollenden einer Anwendungsverlagerung an dem Ziel-Edge-Computing-Host konfiguriert ist;
wobei die Vorbereitung Folgendes umfasst:
Erzeugen einer Anwendungsinstanz auf dem Ziel-Edge-Computing-Host oder Übertragen einer Anwendungskontextinformation an den Ziel-Edge-Computing-Host.

6. Vorrichtung zur Anwendungsverlagerung auf der Basis von Edge Computing nach Anspruch 5, wobei das Vorhersagemodul zu Folgendem konfiguriert ist:
Erlangen einer aktuellen Standortinformation und einer Bewegungsinformation eines Endgeräts; und
Vorhersagen des Ziel-Edge-Computing-Hosts auf der Basis der aktuellen Standortinformation und der Bewegungsinformation.

7. Vorrichtung zur Anwendungsverlagerung auf der Basis von Edge Computing nach Anspruch 6, wobei die Bewegungsinformationen des Endgeräts mindestens eines von Standortinformationen, Bewegungsrichtung, Bewegungsgeschwindigkeit und Navigationsinformationen des Endgeräts umfassen.

8. Vorrichtung zur Anwendungsverlagerung auf der Basis von Edge Computing nach Anspruch 6, wobei das Vorhersagemodul ferner zu Folgendem konfiguriert ist:
Auswählen eines Edge-Computing-Hosts als den Ziel-Edge-Computing-Host als Reaktion auf eine Existenz einer Vielzahl von Edge-Computing-Hosts an einem gleichen Standort.

9. Edge-Computing-System, umfassend:
die Vorrichtung zur Anwendungsverlagerung nach einem der Ansprüche 5 bis 8; und
Funktionsmodule, die dazu konfiguriert sind, Informationen für die Vorrichtung zur Anwendungsverlagerung bereitzustellen, um eine Vorbereitung zu treffen.

10. Edge-Computing-System nach Anspruch 9, wobei die Funktionsmodule Folgendes umfassen:
ein Standortmodul, das dazu konfiguriert ist, der Vorrichtung zur Anwendungsverlagerung Standortinformationen eines Endgeräts bereitzustellen; und
ein Funknetzwerkinformationsmodul, das dazu konfiguriert ist, der Vorrichtung zur Anwendungsverlagerung Funknetzwerkinformationen des Edge-Computing-Hosts bereitzustellen.

11. Computerlesbares Speichermedium, auf dem ein Computerprogramm gespeichert ist, das bei Ausführung durch einen Prozessor den Prozessor dazu veranlasst, die Schritte des Verfahrens zur Anwendungsverlagerung auf der Basis von Edge-Computing nach einem der Ansprüche 1 bis 4 durchzuführen.

## Revendications

1. Procédé de relocalisation d'application basée sur l'informatique en périphérie, réalisé par une plateforme hôte MEC, comprenant :
la prédiction d'un hôte informatique en périphérie cible pour une relocalisation d'application (S101) ;
la réalisation d'une préparation sur l'hôte informatique en périphérie cible en réponse au fait que l'hôte informatique en périphérie cible satisfait à une condition prédéfinie (S102) comprenant :
un seuil de distance entre un terminal et l'hôte informatique en périphérie cible, et/ou
un seuil de temps pour que le terminal atteigne l'hôte informatique en périphérie cible ;
le lancement d'une demande de relocalisation d'application réelle vers l'hôte informatique en périphérie cible et la réalisation d'une relocalisation d'application au niveau de l'hôte informatique en périphérie cible (S103) ; et
la libération de la préparation de l'hôte informatique en périphérie cible en réponse au fait qu'une distance entre le terminal et l'hôte informatique en périphérie cible n'est pas réduite en dessous du seuil de distance pendant une période de temps prédéfinie et la re-prédiction de l'hôte informatique en périphérie cible ;
la préparation comprenant :
la création d'une instance d'application sur l'hôte informatique en périphérie cible ou la transmission d'informations de contexte d'application à l'hôte informatique en périphérie cible.

2. Procédé de relocalisation d'application basée sur l'informatique en périphérie selon la revendication 1, ladite prédiction de l'hôte informatique en périphérie cible pour la relocalisation d'application comprenant :
l'acquisition d'informations de localisation actuelle et d'informations de déplacement d'un terminal (S201) ; et
la prédiction de l'hôte informatique en périphérie cible sur la base des informations de localisation actuelle et des informations de déplacement (S202).

3. Procédé de relocalisation d'application basée sur l'informatique en périphérie selon la revendication 2, lesdites informations de déplacement du terminal comprenant au moins des informations parmi des informations de localisation, une direction de déplacement, une vitesse de déplacement et des informations de navigation du terminal.

4. Procédé de relocalisation d'application basée sur l'informatique en périphérie selon la revendication 2, ledit procédé comprenant en outre :
la sélection d'un hôte informatique en périphérie en tant qu'hôte informatique en périphérie cible en réponse à l'existence d'une pluralité d'hôtes informatiques en périphérie à une même localisation.

5. Dispositif de relocalisation d'application basée sur l'informatique en périphérie dans une plateforme hôte MEC, comprenant :
un module de prédiction, configuré pour prédire une informatique en périphérie cible pour une relocalisation d'application ;
un module de jugement et de traitement, configuré pour réaliser une préparation sur l'hôte informatique en périphérie cible en réponse à un jugement selon lequel l'hôte informatique en périphérie cible satisfait à une condition prédéfinie comprenant :
un seuil de distance entre un terminal et l'hôte informatique en périphérie cible, et/ou
un seuil de temps pour que le terminal atteigne l'hôte informatique en périphérie cible ; et
libérer la préparation de l'hôte informatique en périphérie cible en réponse au fait que la distance entre le terminal et l'hôte informatique en périphérie cible n'est pas réduite en dessous du seuil de distance pendant une période de temps prédéfinie et re-prédire l'hôte informatique en périphérie cible ; et
un module d'exécution, configuré pour lancer une demande de relocalisation d'application réelle vers l'hôte informatique en périphérie cible et achever la relocalisation d'application au niveau de l'hôte informatique en périphérie cible ;
la préparation comprenant :
la création d'une instance d'application sur l'hôte informatique en périphérie cible ou la transmission d'informations de contexte d'application à l'hôte informatique en périphérie cible.

6. Dispositif de relocalisation d'application basée sur l'informatique en périphérie selon la revendication 5, ledit module de prédiction étant configuré pour :
acquérir des informations de localisation actuelle et des informations de déplacement d'un terminal ; et
prédire l'hôte informatique en périphérie cible sur la base des informations de localisation actuelle et des informations de déplacement.

7. Dispositif de relocalisation d'application basée sur l'informatique en périphérie selon la revendication 6, lesdites informations de déplacement du terminal comprenant au moins des informations parmi des informations de localisation, une direction de déplacement, une vitesse de déplacement et des informations de navigation du terminal.

8. Dispositif de relocalisation d'application basée sur l'informatique en périphérie selon la revendication 6, ledit module de prédiction étant en outre configuré pour :
sélectionner un hôte informatique en périphérie en tant qu'hôte informatique en périphérie cible en réponse à l'existence d'une pluralité d'hôtes informatiques en périphérie à une même localisation.

9. Système informatique en périphérie, comprenant :
le dispositif de relocalisation d'application selon l'une quelconque des revendications 5 à 8 ; et
des modules de fonction, configurés pour fournir des informations permettant au dispositif de relocalisation d'application de réaliser la préparation.

10. Système informatique en périphérie selon la revendication 9, lesdits modules de fonction comprenant :
un module de localisation, configuré pour fournir des informations de localisation d'un terminal au dispositif de relocalisation d'application ; et
un module d'informations de réseau radio, configuré pour fournir des informations de réseau radio de l'hôte informatique en périphérie au dispositif de relocalisation d'application.

11. Support de stockage lisible par ordinateur stockant un programme informatique qui, lorsqu'il est exécuté par un processeur, amène le processeur à effectuer les étapes du procédé de relocalisation d'application basée sur l'informatique en périphérie selon l'une quelconque des revendications 1 à 4.
